# EUROPÄISCHE PATENTANMELDUNG

(11) **EP 3 285 372 A1**
(43) Veröffentlichungstag der Anmeldung: **21.02.2018**
(21) Anmeldenummer: 16184956.7
(22) Anmeldetag: 19.08.2016
(51) Int. Cl.: H02K 5/20, H02K 9/10, H02K 7/18

(54) **GENERATORGEHÄUSE UND GENERATOR MIT DEM GENERATORGEHÄUSE**

(71) Anmelder: Siemens Aktiengesellschaft, 80333 München (DE)
(72) Erfinder: Die Erfindernennung liegt noch nicht vor

(57) **Zusammenfassung**

Die Erfindung betrifft ein Generatorgehäuse (1) für einen Generator, mit einer Wand (2, 3), die eine Kammer (6, 7) begrenzt und ein Durchgangsloch aufweist, einem Kühlkanal (5), durch den im Betrieb des Generators zum Kühlen des Generators ein Kühlfluid strömbar ist und der sich in dem Durchgangsloch sowie in der Kammer (6, 7) erstreckt, und einem Einsetzkörper (8, 9), der in die Kammer (6, 7) eingesetzt ist und eine an dem Durchgangsloch anliegende Eintrittsöffnung aufweist, die zumindest teilweise formgleich mit dem Durchgangsloch geformt ist und bündig an dem Durchgangsloch anliegt, so dass der Einsetzkörper (8, 9) den Strömungskanal (5) in der Kammer (6, 7) derart begrenzt, dass das Kühlfluid zumindest im Bereich der formgleichen und bündig anliegenden Eintrittsöffnung stufenfrei von dem Durchgangsloch in die Kammer (6, 7) strömbar ist.

## Beschreibung

In einem Kraftwerk zur Erzeugung von Strom wird herkömmlich ein Generator mittels einer Welle von einer Turbine angetrieben. Durch verschiedene Verlustmechanismen in dem Generator wird im Betrieb des Kraftwerks in dem Generator Wärme freigesetzt, die zu einer Temperaturerhöhung des Generators führt. Die maximal zulässige Temperaturerhöhung führt zu einer Begrenzung der von dem Generator erzeugbaren Leistung. Daher wird der Generator herkömmlich gekühlt, indem Kühlluft durch ihn geströmt wird. Dazu weist der Generator ein Gebläse auf, mittels dem der Druck der Kühlluft erhöht wird.

Die Erhöhung des Drucks der Kühlluft bei gleichem geförderten Volumenstrom geht jedoch nachteilig einher mit einer Erhöhung der Temperatur der Kühlluft. Dadurch verringert sich der Wärmetransport von dem Generator auf die Kühlluft, wodurch sich die maximale von dem Generator erzeugbare Leistung verringert. Zudem verbraucht das Gebläse Antriebsleistung, die normalerweise von der Welle bezogen wird. Die von dem Gebläse verbrauchte Antriebsleistung ist dabei proportional zu dem Produkt aus dem durch das Gebläse durchströmenden Volumenstrom und der von dem Gebläse aufgebauten Druckdifferenz. Die von dem Gebläse verbrauchte Antriebsleistung vermindert nachteilig den Wirkungsgrad des Generators und damit den Wirkungsgrad des Kraftwerks.

Aufgabe der Erfindung ist es daher, den Wirkungsgrad eines Generators zu erhöhen.

Das erfindungsgemäße Generatorgehäuse für einen Generator, weist eine Wand, die eine Kammer begrenzt und ein Durchgangsloch aufweist, einen Kühlkanal, durch den im Betrieb des Generators zum Kühlen des Generators ein Kühlfluid strömbar ist und der sich in dem Durchgangsloch sowie in der Kammer erstreckt, und einen Einsetzkörper auf, der in die Kammer eingesetzt ist und eine an dem Durchgangsloch anliegende Eintrittsöffnung aufweist, die zumindest teilweise formgleich mit dem Durchgangsloch geformt ist und bündig an dem Durchgangsloch anliegt, so dass der Einsetzkörper den Strömungskanal in der Kammer derart begrenzt, dass das Kühlfluid zumindest im Bereich der formgleichen und bündig anliegenden Eintrittsöffnung stufenfrei von dem Durchgangsloch in die Kammer strömbar ist. Das Kühlfluid kann beispielsweise Luft sein. Dadurch, dass das Kühlfluid stufenfrei in die Kammer strömbar ist, bildet die Strömung des Kühlfluids an dem Durchgangsloch, via das die Strömung in die Kammer eintritt, weniger Ablösungen. Dadurch bildet die Strömung dort auch weniger Wirbel aus, so dass durch das Einsetzen des Einsetzkörpers in die Kammer der Strömungswiderstand in der Kammer geringer als ohne den Einsetzkörper ist. Durch den geringeren Strömungswiderstand ist zum Durchströmen des Kühlfluids bei einem gleichen Massenstrom ein niedrigerer Druck aufzubauen, als es ohne den Einsetzkörper der Fall ist. Durch den niedrigeren Druck ist die Temperaturerhöhung des Kühlfluids geringer, so dass das Kühlfluid eine größere Menge an Wärme aus dem Generator abführen kann. Zudem ist der Leistungsverbrauch zum Aufbauen des Drucks geringer, so dass der Generator einen höheren Wirkungsgrad hat. Durch das Vorsehen des Einsetzkörpers ist zudem ein herkömmliches Generatorgehäuse leicht zum Erhöhen des Wirkungsgrads des Generators nachrüstbar.

Es ist bevorzugt, dass die Eintrittsöffnung vollständig formgleich mit dem Durchgangsloch geformt ist und bündig an dem Durchgangsloch anliegt, so dass der Einsetzkörper den Strömungskanal in der Kammer derart begrenzt, dass das Kühlfluid vollständig stufenfrei von dem Durchgangsloch in die Kammer strömbar ist. Dadurch ist ein besonders kleiner Strömungswiderstand für das Kühlfluid erreichbar.

Das Generatorgehäuse weist bevorzugt eine zweite Wand auf, die die Kammer begrenzt und ein Durchgangsloch aufweist, wobei der Kühlkanal eingerichtet ist, das Kühlfluid von dem Durchgangsloch in der Wand zu dem Durchgangsloch in der zweiten Wand zu leiten, und der Einsetzkörper eine an dem Durchgangsloch in der zweiten Wand anliegende Austrittsöffnung aufweist, die zumindest teilweise formgleich mit dem Durchgangsloch in der zweiten Wand geformt ist und bündig an dem Durchgangsloch in der zweiten Wand anliegt, so dass der Einsetzkörper den Strömungskanal in der Kammer derart begrenzt, dass das Kühlfluid zumindest im Bereich der formgleichen und bündig anliegenden Austrittsöffnung stufenfrei von der Kammer in das Durchgangsloch in der zweiten Wand strömbar ist. Dadurch kann der Strömungswiderstand des Kühlfluids weiter verringert werden.

Es ist bevorzugt, dass die Austrittsöffnung vollständig formgleich mit dem Durchgangsloch in der zweiten Wand geformt ist und bündig an dem Durchgangsloch in der zweiten Wand anliegt, so dass der Einsetzkörper den Strömungskanal in der Kammer derart begrenzt, dass das Kühlfluid vollständig stufenfrei von der Kammer in das Durchgangsloch in der zweiten Wand strömbar ist. Dadurch ist der Strömungswiderstand des Kühlfluids besonders niedrig.

Das Generatorgehäuse weist bevorzugt eine dritte Wand auf, die die Kammer begrenzt, wobei der Kühlkanal ausgebildet ist, in der Kammer ein Umlenken der Strömung des Kühlfluids zu bewirken und der Einsetzkörper eine Kurve zu dem Umlenken der Strömung aufweist. Durch das Vorsehen der Kurve, insbesondere wenn die Kurve eine Krümmung mit einem großen Krümmungsradius aufweist, können Ablösungen der Strömung des Kühlfluids vermindert werden, wodurch auch der Strömungswiderstand des Kühlfluids vermindert werden kann.

Alternativ ist bevorzugt, dass das Generatorgehäuse eine dritte Wand, die zusammen mit der zweiten Wand eine zweite Kammer begrenzt, wobei der Kühlkanal ausgebildet ist, in der zweiten Kammer ein Umlenken der Strömung des Kühlfluids zu bewirken, und einen zweiten Einsetzkörper aufweist, der in die zweite Kammer eingesetzt ist und eine an dem Durchgangsloch in der zweiten Wand anliegende Eintrittsöffnung aufweist, die zumindest teilweise formgleich mit dem Durchgangsloch in der zweiten Wand geformt ist und bündig an dem Durchgangsloch in der zweiten Wand anliegt, so dass der zweite Einsetzkörper den Strömungskanal in der zweiten Kammer derart begrenzt, dass das Kühlfluid zumindest im Bereich der formgleichen und bündig anliegenden Eintrittsöffnung des zweiten Einsetzkörpers stufenfrei von dem Durchgangsloch in der zweiten Wand in die zweite Kammer strömbar ist, und der zweite Einsetzkörper eine Kurve zu dem Umlenken der Strömung aufweist. Durch das Vorsehen der Kurve, insbesondere wenn die Kurve eine Krümmung mit einem großen Krümmungsradius aufweist, können Ablösungen der Strömung des Kühlfluids vermindert werden, wodurch auch der Strömungswiderstand des Kühlfluids vermindert werden kann. Dabei ist bevorzugt, dass der Strömungskanal in der Kammer die Form eines Diffusors hat, der dem Querschnitt des Strömungskanals von de Wand zu der zweiten Wand vergrößert. Durch den Diffusor lässt sich das Kühlfluid in der Kammer abbremsen, so dass das Kühlfluid, wenn es von der Kammer in die zweite Kammer eintritt, eine niedrige Geschwindigkeit hat. Durch die niedrige Geschwindigkeit neigt das Kühlfluid in der Kurve vorteilhaft wenig zum Ablösen, so dass der Strömungswiderstand vorteilhaft besonders niedrig ist.

Der zweite Einsetzkörper weist bevorzugt mindestens eine Leitschaufel auf, die in dem Strömungskanal im Bereich der Kurve angeordnet ist, die eingerichtet ist die Strömung des Kühlfluids umzulenken und die den Strömungskanal in mehrere Teilkanäle unterteilt, die in Richtung von der Außenwand der Kurve zu der Innenwand der Kurve nebeneinander angeordnet sind. Dadurch wird erreicht, dass die Strömung an der Innenwand der Kurve wesentlich weniger dazu neigt, abzulösen, wodurch der Strömungswiderstand in der zweiten Kammer weiter verringerbar ist. Dabei können die Leitschaufeln im Wesentlichen die Krümmung der Kurve haben, wobei, wenn mehrere der Leitschaufeln vorgesehen sind, der Krümmungsradius der Leitschaufeln von der Innenwand zu der Außenwand zunimmt.

Der Kühlkanal bewirkt bevorzugt in der zweiten Kammer eine Umlenkung von im Wesentlichen 90°. Bei einer derart starken Umlenkung neigt die Strömung des Kühlfluids stark dazu abzulösen. Damit ist durch das Vorsehen des Einsetzkörpers beziehungsweise des zweiten Einsetzkörpers eine besonders starke Verringerung des Strömungswiderstands erreichbar.

Es ist bevorzugt, dass die Wand, die zweite Wand und/oder die dritte Wand Teil eines Statorhalters sind, der eingerichtet ist, den Stator des Generators abzustützen, Teil eines Rotorhalters sind, der eingerichtet ist, den Rotor des Generators abzustützen, Teil einer Ansaugkammer sind und/oder die Ansaugkammer begrenzen, wobei die Ansaugkammer eingerichtet ist ein Gebläse des Generators zu beherbergen, mittels dem das Kühlfluid in den Kühlkanal strömbar ist.

Der Einsetzkörper und/oder der zweite Einsetzkörper weisen bevorzugt eine Messvorrichtung auf, mit der Eigenschaften des Kühlfluids, insbesondere Totaldruck, Volumenstrom und/oder Temperatur, messbar sind. Dadurch, dass in dem von dem Einsetzkörper und/oder von dem zweiten Einsetzkörper begrenztem Kühlkanal eine wirbelarme Strömung vorliegt, können die Eigenschaften des Kühlfluids dort besonders einfach und genau gemessen werden.

Es ist bevorzugt, dass der Einsetzkörper und/oder der zweite Einsetzkörper aus einem Kunststoff und/oder einem Verbundwerkstoff, insbesondere ein kohlenstofffaserverstärkter Kunststoff, ein Fiberglasverbundwerkstoff, ein Epoxidverbundwerkstoff und/oder ein Schaumverbundwerkstoff, hergestellt sind. Bei der vorgenannten Materialen handelt es sich vorteilhaft um kostengünstige, erosionsfeste und leichte Materialien.

Der Einsetzkörper und/oder der zweite Einsetzkörper sind bevorzugt mittels Tiefziehen oder mittels Fräsen hergestellt. Dadurch sind die Einsetzkörper kostengünstig und einfach herstellbar.

Der erfindungsgemäße Generator weist das Generatorgehäuse auf. Bevorzugt weist der Generator ein Gebläse auf, mittels dem das Kühlfluid in den Kühlkanal strömbar ist.

Im Folgenden wird anhand der beigefügten schematischen Zeichnungen die Erfindung näher erläutert. Es zeigen:
- Figur 1: eine perspektivische Ansicht eines Generatorgehäuses,
- Figur 2: eine perspektivische Ansicht eines Einsetzkörpers und einer ersten Ausführungsform eines zweiten Einsetzkörpers,
- Figur 3: eine perspektivische Ansicht einer zweiten Ausführungsform des zweiten Einsetzkörpers,
- Figur 4: eine perspektivische Ansicht einer dritten Ausführungsform des zweiten Einsetzkörpers,
- Figur 5: eine perspektivische Ansicht einer vierten Ausführungsform des zweiten Einsetzkörpers,
- Figur 6: einen Querschnitt durch die zweite Ausführungsform des zweiten Einsetzkörpers mit Strömungslinien und
- Figur 7: einen Querschnitt durch die vierte Ausführungsform des zweiten Einsetzkörpers mit Strömungslinien.

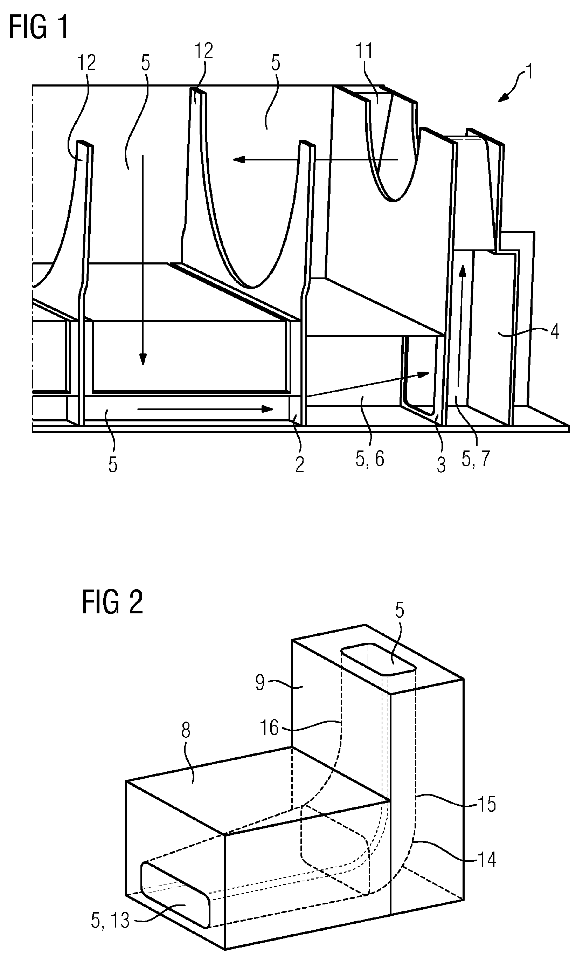

Wie es aus Figur 1 ersichtlich ist, weist ein Generator zur Erzeugung von elektrischem Strom ein Generatorgehäuse 1 auf. Der Generator weist weiterhin einen Stator und einen Rotor auf (nicht in Figur 1 dargestellt), die innerhalb des Generatorgehäuses 1 angeordnet sind. Das Generatorgehäuse 1 weist mindestens zwei Statorhalter 12 zum Abstützen des Stators auf, wobei die Statorhalter 12 eine halbkreisförmige Aussparung aufweisen, so dass der Stator von oben in die halbkreisförmigen Aussparungen einsetzbar ist. Der Rotor ist dabei radial innerhalb des Stators angeordnet.

Der Generator weist einen Kühlkanal 5 auf, durch den im Betrieb des Generators zum Kühlen des Generators ein Kühlfluid, insbesondere Luft, strömbar ist. Dazu ist an dem Rotor ein Gebläse angebracht und das Generatorgehäuse 1 weist eine Ansaugkammer 11 auf, innerhalb derer das Gebläse angeordnet ist und im Betrieb des Generators zur Erhöhung des Drucks des Kühlfluids rotierbar ist. Der Kühlkanal 5 erstreckt sich ausgehend von der Ansaugkammer 11 im Wesentlichen in Axialrichtung des Generators und wird in dem Stator und in dem Rotor durch in dem Stator und in dem Rotor eingebrachte Kanäle gebildet. Indem im Betrieb des Generators das Kühlfluid in den Kanälen geströmt wird, wird Wärme von dem Stator und dem Rotor auf das Kühlfluid übertragen.

Stromab der Kanäle erfolgt eine Umlenkung des Strömungskanals 5, so dass das Kühlfluid im Wesentlichen in Radialrichtung des Generators nach außen strömt. Das Generatorgehäuse 1 weist einen Wärmetauscher 10 auf, der eingerichtet ist dem Kühlfluid Wärme zu entziehen, der innerhalb des Strömungskanals 5 angeordnet ist und der von dem Kühlfluid im Wesentlichen in der Radialrichtung durchströmt wird. Stromab des Wärmetauschers 10 erfolgt eine Umlenkung des Strömungskanals 5, so dass Kühlfluid im Wesentlichen in Axialrichtung des Generators strömt. Stromab davon erfolgt eine weitere Umlenkung des Strömungskanals 5, so dass das Kühlfluid in der Radialrichtung nach innen strömt und in die Ansaugkammer 11 eintritt.

Das Generatorgehäuse 1 weist eine Wand 2 und eine zweite Wand 3, die stromab des Wärmetauschers 10 und stromauf der Ansaugkammer 11 angeordnet sind, eine erste Kammer 6 begrenzen und jeweils ein Durchgangsloch aufweisen. Dabei kann, wie in Figur 1 dargestellt, die Wand 2 Teil einer der Statorhalter 12 sein. Zudem kann die zweite Wand 3, wie in Figur 1 dargestellt, die Ansaugkammer 11 abstützen. Der Kühlkanal 5 erstreckt sich von dem Durchgangsloch in der Wand 2 bis zu dem Durchgangsloch in der zweiten Wand 3 und wird im Betrieb des Generators in Richtung von der Wand 2 zu der zweiten Wand 3 von dem Kühlfluid durchströmt. Dabei können, wie in Figur 1 dargestellt, die Wand 2 und die zweite Wand 3 im Wesentlichen parallel zueinander angeordnet sein und der Kühlkanal 5 kann eingerichtet sein das Kühlfluid im Wesentlichen in einer Richtung senkrecht zu den beiden Wänden 2, 3 zu strömen.

Wie es aus Figur 1 ersichtlich ist, weist die Wand 2 an ihrer der Kammer 6 zugewandten Oberfläche vollumfänglich um das Durchgangsloch eine Kante auf. Diese Kante bewirkt eine sprunghafte Vergrößerung des Strömungsquerschnitts, wenn das Kühlfluid via das Durchgangsloch in der Wand 2 in die erste Kammer 6 eintritt. Durch die sprunghafte Vergrößerung des Strömungsquerschnitts können sich an der Kante Ablösungen der Strömung des Kühlfluids bilden, was mit einer Erhöhung des Strömungswiderstands des Kühlfluids einhergeht. Figur 2 zeigt, dass das Generatorgehäuse 1 einen Einsetzkörper 8 aufweist, der erfindungsgemäß in die Kammer 6 einzusetzen ist und den Kühlkanal 5 in der Kammer 6 kantenfrei begrenzt. Dazu hat der Einsetzkörper 8 eine an dem Durchgangsloch in der Wand 2 anliegende Eintrittsöffnung, die vollständig formgleich mit dem Durchgangsloch in der Wand 2 geformt ist und bündig an dem Durchgangsloch in der Wand 2 anliegt, so dass die Projektionen der Eintrittsöffnung und des Durchgangskanals in der Wand 2 senkrecht zu der Wand 2 deckungsgleich übereinanderliegen. Damit begrenzt der Einsetzkörper 8 den Strömungskanal 5 in der Kammer 6 derart, dass das Kühlfluid zumindest im Bereich der formgleichen und bündig anliegenden Eintrittsöffnung stufenfrei von dem Durchgangsloch in der Wand 2 in die Kammer 6 strömbar ist. Damit erfährt die Strömung des Kühlfluids, wenn sie von dem Durchgangsloch in der Wand 2 in die erste Kammer 6 eintritt, keine Änderung in ihrem Strömungsquerschnitt.

Zudem hat der Einsetzkörper 8 eine an dem Durchgangsloch in der zweiten Wand 3 anliegende Austrittsöffnung, die vollständig formgleich mit dem Durchgangsloch in der zweiten Wand 3 geformt ist und bündig an dem Durchgangsloch in der zweiten Wand 3 anliegt, so dass die Projektionen der Austrittsöffnung und des Durchgangskanals in der zweiten Wand 3 senkrecht zu der zweiten Wand 3 deckungsgleich übereinanderliegen. Damit begrenzt der Einsetzkörper 8 den Strömungskanal 5 in der Kammer 6 derart, dass das Kühlfluid vollständig stufenfrei von der Kammer 6 in das Durchgangsloch in der zweiten Wand 3 strömbar ist. Damit erfährt die Strömung des Kühlfluids, wenn sie von der Kammer 6 in das Durchgangsloch in der zweiten Wand 3 eintritt, keine Änderung in ihrem Strömungsquerschnitt.

Wie es aus Figur 2 ersichtlich ist, begrenzt der Einsetzkörper 8 den Strömungskanal 5 in der ersten Kammer 6 derart, dass der Strömungskanal 5 in der ersten Kammer 6 die Form eines Diffusors 13 hat, der den Strömungskanal 5 in Richtung von der Wand zu der zweiten Wand vergrößert. Denkbar sind jedoch auch beliebige andere Formen.

Figur 1 zeigt, dass das Generatorgehäuse 1 eine dritte Wand 4 aufweist, die mit der zweiten Wand 3 eine zweite Kammer 7 begrenzt. Der Kühlkanal 5 erstreckt sich ausgehend von dem Durchgangsloch in der zweiten Wand 3 in der zweiten Kammer 6 und ist ausgebildet in der zweiten Kammer 7 ein Umlenken des Kühlfluids um im Wesentlichen 90° zu bewirken. Die zweite Wand 3 weist an ihrer der zweiten Kammer 7 zugewandten Oberfläche vollumfänglich um das Durchgangsloch in der zweiten Wand 3 eine Kante auf. Diese Kante bewirkt eine sprunghafte Vergrößerung des Strömungsquerschnitts, wenn das Kühlfluid via das Durchgangsloch in der zweiten Wand 3 in die zweite Kammer 7 eintritt. Durch die sprunghafte Vergrößerung des Strömungsquerschnitts können sich an der Kante Ablösungen der Strömung des Kühlfluids bilden, was mit einer Erhöhung des Strömungswiderstands des Kühlfluids einhergeht. Figur 2 zeigt, dass das Generatorgehäuse 1 einen zweiten Einsetzkörper 9 gemäß einer ersten Ausführungsform aufweist, der erfindungsgemäß in die zweite Kammer 7 einzusetzen ist. Der zweite Einsetzkörper 9 weist eine an dem Durchgangsloch in der zweiten Wand 3 anliegende Eintrittsöffnung auf, die zumindest teilweise formgleich mit dem Durchgangsloch in der zweiten Wand 3 geformt ist, und bündig an dem Durchgangsloch in der zweiten Wand 3 anliegt. Die Projektionen des Durchgangslochs in der zweiten Wand 3 und der Eintrittsöffnung des zweiten Einsetzkörpers 9 senkrecht zu der zweiten Wand 3 sind deckungsgleich, so dass der zweite Einsetzkörper 9 den Strömungskanal 5 in der zweiten Kammer 7 derart begrenzt, dass das Kühlfluid zumindest im Bereich der formgleichen und bündig anliegenden Eintrittsöffnung des zweiten Einsetzkörpers 9 stufenfrei von dem Durchgangsloch in der zweiten Wand 3 in die zweite Kammer 7 strömbar ist. Der zweite Einsetzkörper 9 weist eine Kurve 14 zu dem Umlenken der Strömung auf. Wie es aus Figur 2 ersichtlich ist, ist der Bereich der Außenwand 15 der Kurve 14 formgleich und bündig mit der Eintrittsöffnung in der zweiten Wand 3.

Bei der zweiten bis vierten Ausführungsform des zweiten Einsetzkörpers 9 ist zusätzlich zu der Außenwand 15 auch die Innenwand 16 der Kurve 9 formgleich und bündig mit dem Durchgangsloch in der zweiten Wand 3 ausgeführt. In allen Ausführungsformen für den zweiten Einsetzkörper sind auch verbliebenen Wände der Kurve kantenfrei ausgeführt.

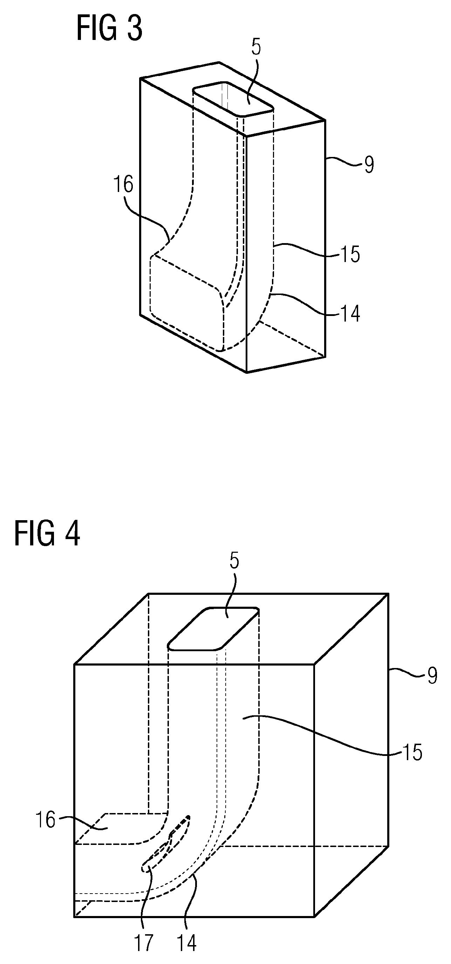

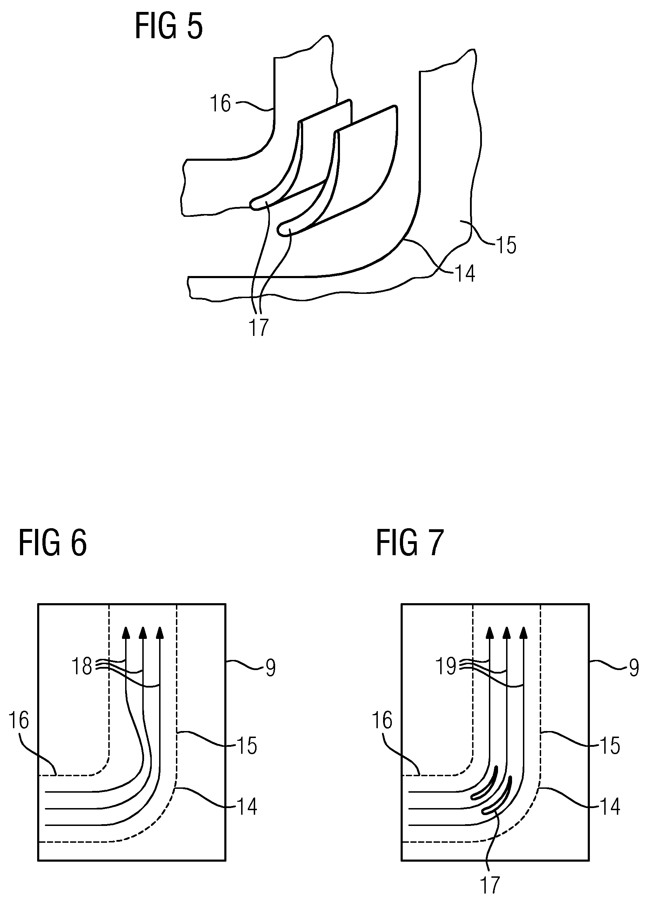

Die dritte Ausführungsform des zweiten Einsetzkörpers 9 gemäß Figur 4 und die vierte Ausführungsform des zweiten Einsetzkörpers 9 gemäß Figur 5 weisen mindestens eine Leitschaufel 17 auf, die in dem Strömungskanal 5 im Bereich der Kurve 14 angeordnet ist, eine Krümmung hat, die im Wesentlichen der Krümmung der Kurve 14 entspricht und den Strömungskanal 5 in mehrere Teilkanäle unterteilt, die in Richtung von der Außenwand 15 der Kurve 14 zu der Innenwand 16 der Kurve 14 nebeneinander angeordnet sind. Dabei weist die dritte Ausführungsform eine der Leitschaufeln 17 und die vierte Ausführungsform zwei der Leitschaufeln 17 auf, wobei jedoch auch eine beliebige Anzahl für die Leitschaufeln 17 denkbar ist.

Figur 6 zeigt einen Querschnitt durch die zweite Ausführungsform des zweiten Einsetzkörpers 9, die keine Leitschaufeln aufweist, wobei in Figur 6 Strömungslinien 18 eingezeichnet sind. Figur 7 zeigt einen Querschnitt durch die vierte Ausführungsform des zweiten Einsetzkörpers 9, die die zwei Leitschaufeln 17 aufweist, wobei in Figur 7 Strömungslinien 19 eingezeichnet sind. Wie es aus Figur 6 ersichtlich ist, sind die Strömungslinien 18 im Bereich der Kurve 14 eng an der Außenwand 15 gedrängt, was in einem großen Ablösegebiet an der Innenwand 16 im Bereich der Kurve 14 resultiert. Dahingegen werden die Strömungslinien 19 durch die Leitschaufeln 17 auseinander gedrängt, was in einem kleinen Ablösegebiet an der Innenwand 16 resultiert. Durch das kleinere Ablösgebiet hat die vierte Ausführungsform einen kleineren Strömungswiderstand als die zweite Ausführungsform.

Der erste Einsetzkörper 8 und/oder der zweite Einsetzkörper 9 können eine Messvorrichtung aufweisen, mit der Eigenschaften des Kühlfluids, insbesondere Totaldruck, Volumenstrom und/oder Temperatur, messbar sind.

Der Einsetzkörper 8 und/oder der zweite Einsetzkörper 9 können aus einem Kunststoff und/oder einem Verbundwerkstoff, insbesondere ein kohlenstofffaserverstärkter Kunststoff, ein Fiberglasverbundwerkstoff, ein Epoxidverbundwerkstoff und/oder ein Schaumverbundwerkstoff, hergestellt sein.

Der Einsetzkörper 8 und/oder der zweite Einsetzkörper 9 können mittels Tiefziehen oder mittels Fräsen hergestellt sein.

Obwohl die Erfindung im Detail durch die bevorzugten Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Generatorgehäuse (1) für einen Generator,
mit einer Wand (2, 3), die eine Kammer (6, 7) begrenzt und ein Durchgangsloch aufweist, einem Kühlkanal (5), durch den im Betrieb des Generators zum Kühlen des Generators ein Kühlfluid strömbar ist und der sich in dem Durchgangsloch sowie in der Kammer (6, 7) erstreckt, und einem Einsetzkörper (8, 9), der in die Kammer (6, 7) eingesetzt ist und eine an dem Durchgangsloch anliegende Eintrittsöffnung aufweist, die zumindest teilweise formgleich mit dem Durchgangsloch geformt ist und bündig an dem Durchgangsloch anliegt, so dass der Einsetzkörper (8, 9) den Strömungskanal (5) in der Kammer (6, 7) derart begrenzt, dass das Kühlfluid zumindest im Bereich der formgleichen und bündig anliegenden Eintrittsöffnung stufenfrei von dem Durchgangsloch in die Kammer (6, 7) strömbar ist.

2. Generatorgehäuse (1) gemäß Anspruch 1,
wobei die Eintrittsöffnung vollständig formgleich mit dem Durchgangsloch geformt ist und bündig an dem Durchgangsloch anliegt, so dass der Einsetzkörper (8, 9) den Strömungskanal (5) in der Kammer (6, 7) derart begrenzt, dass das Kühlfluid vollständig stufenfrei von dem Durchgangsloch in die Kammer (6, 7) strömbar ist.

3. Generatorgehäuse (1) gemäß Anspruch 1 oder 2,
wobei das Generatorgehäuse (1) eine zweite Wand (3) aufweist, die die Kammer (6) begrenzt und ein Durchgangsloch aufweist, wobei der Kühlkanal (5) eingerichtet ist, das Kühlfluid von dem Durchgangsloch in der Wand (2) zu dem Durchgangsloch in der zweiten Wand (3) zu leiten, und der Einsetzkörper (8) eine an dem Durchgangsloch in der zweiten Wand (3) anliegende Austrittsöffnung aufweist, die zumindest teilweise formgleich mit dem Durchgangsloch in der zweiten Wand (3) geformt ist und bündig an dem Durchgangsloch in der zweiten Wand anliegt, so dass der Einsetzkörper (8) den Strömungskanal (5) in der Kammer (6) derart begrenzt, dass das Kühlfluid zumindest im Bereich der formgleichen und bündig anliegenden Austrittsöffnung stufenfrei von der Kammer (6) in das Durchgangsloch in der zweiten Wand (3) strömbar ist.

4. Generatorgehäuse (1) gemäß Anspruch 3,
wobei die Austrittsöffnung vollständig formgleich mit dem Durchgangsloch in der zweiten Wand (3) geformt ist und bündig an dem Durchgangsloch in der zweiten Wand (3) anliegt, so dass der Einsetzkörper (8) den Strömungskanal (5) in der Kammer (6) derart begrenzt, dass das Kühlfluid vollständig stufenfrei von der Kammer (6) in das Durchgangsloch in der zweiten Wand (3) strömbar ist.

5. Generatorgehäuse (1) gemäß einem der Anspruch 1 oder 2,
wobei das Generatorgehäuse (1) eine dritte Wand (4) aufweist, die die Kammer (7) begrenzt, wobei der Kühlkanal (5) ausgebildet ist, in der Kammer (7) ein Umlenken der Strömung des Kühlfluids zu bewirken und der Einsetzkörper (8) eine Kurve (14) zu dem Umlenken der Strömung aufweist.

6. Generatorgehäuse (1) gemäß einem der Ansprüche 3 oder 4,
wobei das Generatorgehäuse (1) eine dritte Wand (4), die zusammen mit der zweiten Wand (3) eine zweite Kammer (7) begrenzt, wobei der Kühlkanal (5) ausgebildet ist, in der zweiten Kammer (7) ein Umlenken der Strömung des Kühlfluids zu bewirken, und einen zweiten Einsetzkörper (9) aufweist, der in die zweite Kammer (7) eingesetzt ist und eine an dem Durchgangsloch in der zweiten Wand (3) anliegende Eintrittsöffnung aufweist, die zumindest teilweise formgleich mit dem Durchgangsloch in der zweiten Wand (3) geformt ist und bündig an dem Durchgangsloch in der zweiten Wand (3) anliegt, so dass der zweite Einsetzkörper (9) den Strömungskanal (5) in der zweiten Kammer (7) derart begrenzt, dass das Kühlfluid zumindest im Bereich der formgleichen und bündig anliegenden Eintrittsöffnung des zweiten Einsetzkörpers (9) stufenfrei von dem Durchgangsloch in der zweiten Wand (3) in die zweite Kammer (7) strömbar ist, und der zweite Einsetzkörper (9) eine Kurve (14) zu dem Umlenken der Strömung aufweist.

7. Generatorgehäuse (1) gemäß Anspruch 6,
wobei der Strömungskanal (5) in der Kammer (6) die Form eines Diffusors (13) hat.

8. Generatorgehäuse (1) gemäß einem der Ansprüche 5 bis 7,
wobei der zweite Einsetzkörper (9) mindestens eine Leitschaufel (17) aufweist, die in dem Strömungskanal (5) im Bereich der Kurve (14) angeordnet ist, die eingerichtet ist die Strömung des Kühlfluids umzulenken und die den Strömungskanal (5) in mehrere Teilkanäle unterteilt, die in Richtung von der Außenwand (15) der Kurve (14) zu der Innenwand (16) der Kurve (14) nebeneinander angeordnet sind.

9. Generatorgehäuse (1) gemäß einem der Ansprüche 5 bis 8,
wobei der Kühlkanal (5) in der zweiten Kammer (7) eine Umlenkung von im Wesentlichen 90° bewirkt.

10. Generatorgehäuse (1) gemäß einem der Ansprüche 1 bis 9,
wobei die Wand (2), die zweite Wand (3) und/oder die dritte Wand (3) Teil eines Statorhalters (12) sind, der eingerichtet ist, den Stator des Generators abzustützen, Teil eines Rotorhalters sind, der eingerichtet ist, den Rotor des Generators abzustützen, Teil einer Ansaugkammer (11) sind und/oder die Ansaugkammer (11) begrenzen, wobei die Ansaugkammer (11) eingerichtet ist ein Gebläse des Generators zu beherbergen, mittels dem das Kühlfluid in den Kühlkanal (5) strömbar ist.

11. Generatorgehäuse (1) gemäß einem der Ansprüche 1 bis 10,
wobei der Einsetzkörper (8) und/oder der zweite Einsetzkörper (9) eine Messvorrichtung aufweisen, mit der Eigenschaften des Kühlfluids, insbesondere Totaldruck, Volumenstrom und/oder Temperatur, messbar sind.

12. Generatorgehäuse (1) gemäß einem der Ansprüche 1 bis 11, wobei der Einsetzkörper (8) und/oder der zweite Einsetzkörper (9) aus einem Kunststoff und/oder einem Verbundwerkstoff, insbesondere ein kohlenstofffaserverstärkter Kunststoff, ein Fiberglasverbundwerkstoff, ein Epoxidverbundwerkstoff und/oder ein Schaumverbundwerkstoff, hergestellt sind.

13. Generatorgehäuse (1) gemäß einem der Ansprüche 1 bis 12,
wobei der Einsetzkörper (8) und/oder der zweite Einsetzkörper (9) mittels Tiefziehen oder mittels Fräsen hergestellt sind.

14. Generator mit einem Generatorgehäuse (1) gemäß einem der Ansprüche 1 bis 13.

15. Generator gemäß Anspruch 14,
wobei der Generator ein Gebläse aufweist, mittels dem das Kühlfluid in den Kühlkanal (5) strömbar ist.
